# EUROPEAN PATENT SPECIFICATION

(11) **EP 2 393 288 B1**
(45) Date of publication and mention of the grant of the patent: **15.02.2017**
(21) Application number: 11168581.4
(22) Date of filing: 02.06.2011
(51) Int. Cl.: H04N 5/60, H04N 21/43, H04N 21/434, H04N 21/236

(54) **System and method for in-band a/v timing measurement of serial digital video signals**
System und Verfahren zur bandinternen A/V-Zeitpunktmessung von seriellen digitalen Videosignalen
Système et procédé de mesure de temporisation A/V intra-bande de signaux vidéo numériques de série

(30) Priority: 02.06.2010 US 792597; 02.06.2010 US 792617
(43) Date of publication of application: 07.12.2011
(73) Proprietor: Disney Enterprises, Inc., Burbank, CA 91521 (US)
(72) Inventor: Strein, Michael J., Oakdale, NY New York 11769 (US); Stefanidis, Efthimis, Douglaston, NY New York 11362 (US); Jackson, James L., Cresskill, NJ New Jersey (US)
(74) Representative: Round, Edward Mark

(56) References cited:
- EP-A2- 0 539 200
- EP-A2- 0 690 630
- WO-A1-2010/021966
- US-A1- 2008 074 543
- "Ancillary Data", Wikipedia, 17 May 2010 (2010-05-17), XP055075733, Retrieved from the Internet: URL:http://en.wikipedia.org/w/index.php?ti tle=Ancillary_data&oldid=362625861 [retrieved on 2013-08-20]

## Description

### BACKGROUND

### Field of the Invention

The present invention relates to the field of audio and video signaling and, in particular, to a system and method for in-band A/V timing measurement of serial digital video signals.

### Description of the Related Art

Viewers can easily detect when the audio corresponding to a video images is not synchronized. Even a relative offset between the video and audio signals of only one or two frames can result in a broadcast that does not appear to be lip synched. The lack of synchronization may be the result of delays introduced to either or both the video and audio signals from the point of origin until when the signals are output from a television facility.

In order to enable resynchronization of the video and audio signals by a receiver, some conventional systems characterize the relative offset in time from the point of origin of the audio and video signals to the point when the audio and video signals are output from a television facility. Conventional characterization techniques measure the relative offset through the television facility using specific test patterns when the television facility is out of service. Once the relative offset between the video and audio signals is determined, the equipment within the television facility may be adjusted to eliminate or reduce the relative offset to an acceptable level. Other techniques that do not require the television facility to be out of service in order to characterize the relative offset require expensive equipment and bi-directional communication between the television facility and receivers in order to resynchronize the video and audio signals at each receiver.

As the foregoing illustrates, there is a need in the art for an improved technique for characterizing the relative offset in time between audio and video signals and providing the offset measurements to the receiver of the audio and video signals.

WO 2010/021966 A1 refers to a technique for feature optimization and reliability estimation for audio and video signature generation and detection. Here measures of confidence are generated at a remote destination to optimize processing and provide an indication of reliability of a calculated synchronization error.

EP 0690630 A2 discloses a method and apparatus for digital signal transmission in which the digital signal format for transmitted digital signals has an ancillary data section and a payload section within which there are a plurality of channels for video signals or the like.

### SUMMARY

One aspect of the invention provides a system for characterizing a relative offset in time between audio and video signals according to claim 1.

One aspect of the invention provides a system for characterizing the relative offset in time between audio and video signals according to claim 7.

One aspect of the invention provides a computer-implemented method for characterizing a relative offset in time between audio and video signals according to claim 6.

One advantage of the techniques described herein is that the television facility does not need to be out of service during the characterization of the relative offset in time between the video and audio signals. The characterization occurs dynamically and the measurement data needed to determine the relative offsets is provided to the receiver with the video and audio signals by using in-band signaling. Yet another advantage includes simpler and less expensive hardware, since the receiver only needs store a sequence of checksums extracted from the received signals and perform comparison operations with captured checksums to calculate the relative offsets.

### BRIEF DESCRIPTION OF THE DRAWINGS

So that the manner in which the above recited features of the invention can be understood in detail, a more particular description of the invention, briefly summarized above, may be had by reference to embodiments, some of which are illustrated in the appended drawings. It is to be noted, however, that the appended drawings illustrate only typical embodiments of this invention and are therefore not to be considered limiting of its scope, for the invention may admit to other equally effective embodiments.
Figure 1 is a block diagram of a system configured to implement one or more aspects of the present invention.
Figure 2A is a conceptual diagram illustrating a frame including a line of video data and corresponding audio data as well as the VANC space, according to one embodiment of the invention.
Figure 2B is a conceptual diagram illustrating a sequence of synchronized frames including video data and corresponding audio data as well as a sequence of unsynchronized frames including video data and corresponding audio data, according to one embodiment of the invention.
Figure 3A is a block diagram illustrating the VANC data inserter of FIG. 1, according to one embodiment of the invention.
Figure 3B is a block diagram illustrating the network VANC receiver of FIG. 1, according to one embodiment of the invention.
Figure 4A is a flowchart of method steps describing the operation of the VANC data inserter of FIG. 3A, according to one embodiment of the invention.
Figure 4B is a flowchart of method steps describing the operation of the VANC data receiver of FIG. 3B, according to one embodiment of the invention.

### DETAILED DESCRIPTION OF EXEMPLARY EMBODIMENTS

The system and method for characterizing relative offsets in time between video and audio signals and resynchronizing the video and audio signals can be implemented in any digital television delivery system that transmits a high-definition (HD) or other standard format television signal. The structure of standard format television signals can be used to transmit additional information, sometimes referred to ancillary data. In an embodiment, characterization data is encoded as ancillary data along with the digitally transmitted audio and video signals. The characterization data is used by a receiver to resynchronize the video and audio signals.

The system and method for characterizing relative offsets in time between video and audio signals and resynchronizing the video and audio signals can be implemented in hardware, software, or a combination of hardware and software. When implemented in hardware, the system and method for characterizing relative offsets in time between video and audio signals and resynchronizing the video and audio signals can be implemented using specialized hardware elements and logic. When the system and method for characterizing relative offsets in time between video and audio signals and resynchronizing the video and audio signals is implemented in software, the software can be used to control the various components in a system and network associated with the program. The software can be stored in a memory or carried on any suitable carrier medium and executed by a suitable instruction execution system (microprocessor). The hardware implementation of the system and method for characterizing relative offsets in time between video and audio signals and resynchronizing the video and audio signals can include any or a combination of the following technologies, which are all well known in the art: discrete electronic components, a discrete logic circuit(s) having logic gates for implementing logic functions upon data signals, an application specific integrated circuit having appropriate logic gates, a programmable gate array(s) (PGA), a field programmable gate array (FPGA), etc.

The software for the system and method of characterizing relative offsets in time between video and audio signals and resynchronizing the video and audio signals comprises an ordered listing of executable instructions for implementing logical functions, and can be embodied in any computer-readable medium for use by or in connection with an instruction execution system, apparatus, or device, such as a computer-based system, processor-containing system, or other system that can fetch the instructions from the instruction execution system, apparatus, or device and execute the instructions.

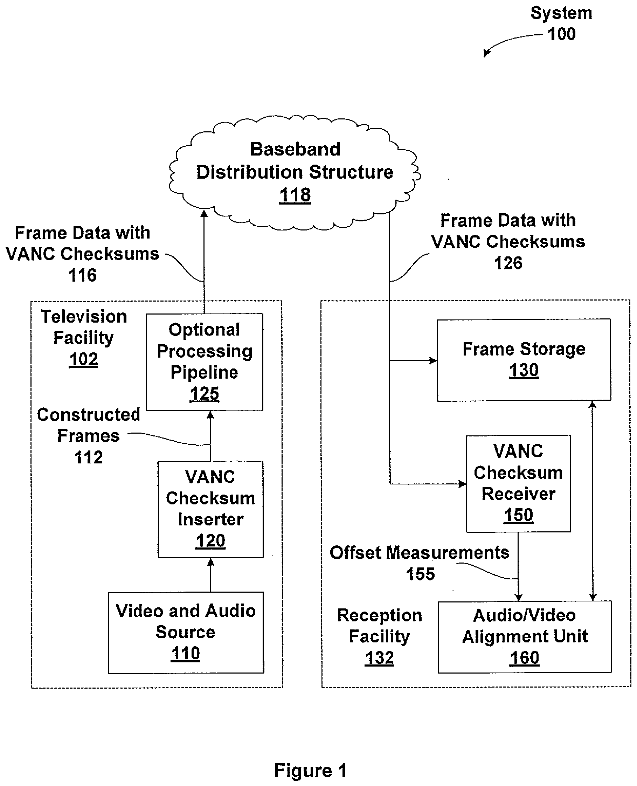

FIG. 1 is a block diagram illustrating an example of a system 100 that can implement the system for characterizing relative offsets in time between video and audio signals and resynchronizing the video and audio signals. The system 100 includes a television origination facility 102, a baseband distribution structure 118, and a reception facility 132. The television origination facility 102 may be a television studio and the reception facility 132 may be a post-production facility. The system 100 may be positioned within a larger system at a point of passthru or aggregation. The television origination facility 102 and the reception facility 132 may be located within close proximity to each other, e.g., within the same facility, or at different geographical locations. Details of the baseband distribution structure 118, which can be capable of bi-directional communication, are not described herein as they are known to those skilled in the art. In one embodiment, the television origination facility 102 can be, for example, a cable television (CATV) broadcast facility that transmits the frame data with VANC checksums 116 over a cable, or other wired distribution system provided by the baseband distribution structure 118. Further, the frame data with VANC checksums 116 may be transmitted from the television origination facility 102 to the reception facility 132 through the baseband distribution structure 118 using information embedded in a high-definition television (HDTV) or other standard broadcast signal. The reception facility 132 may output signals to satellite or other types of transmission systems.

The television origination facility 102 includes a video and audio source 110 that stores video and audio data that is output to a VANC checksum inserter 120. In an embodiment, the VANC checksum inserter 120 is a communication element that can insert data into the vertical ancillary (VANC) space of a HDTV or other standard format video signal. The insertion of information into the vertical ancillary space of an HDTV signal is described in SMPTE (The Society Of Motion Picture And Television Engineers) standard 334M-200 entitled "Vertical Ancillary Data Mapping for Bit-Serial Interface,".

In accordance with an embodiment of the system for characterizing relative offsets in time between video and audio signals and resynchronizing the video and audio signals, the VANC checksum inserter 120 dynamically captures checksums for a scanline of video data and the corresponding audio data received from the video and audio source 110. The checksums are typically computed by another unit within the television origination facility 102 (not shown) and are used but the reception facility 132 to determine whether or not the data is received without errors. The captured checksums are encoded in the VANC for the frame that includes the video and audio data to produce a constructed frame. Constructed frames 112 are output by the VANC checksum inserter 120 to an optional processing pipeline 125 that may be configured to perform additional processing of the video and audio signals. The optional processing pipeline 125 outputs the frame data with VANC checksums 116 to the baseband distribution structure 118. The baseband distribution structure 118 transmits the frame data with VANC checksums 116 to the reception facility 132.

The reception facility 132 receives the frame data with VANC checksums 126 that includes the checksums that are encoded in the VANC and video and audio data. The video and audio data for a sequence of frames are stored in frame storage 130. The audio data may be stored separately from the video data in the frame storage 130. A VANC checksum receiver 150 receives the frame data with VANC checksums 126 and extracts the video and audio checksums that are encoded in the VANC. The VANC checksum receiver 150 stores the extracted video and audio checksums and captures checksums for the same scanline of each frame using the video and audio data that is received as part of the frame data with VANC checksums 126. The captured checksums are compared with the extracted checksums to measure any relative offsets between the video data and one or more of the audio channel pairs represented by the audio data. Each pair of audio channels may have a different offset in time relative to the video data, so each pair of audio channels may be separately synchronized to the video data. The different relative offsets for the audio data are output to an audio/video alignment unit 160 as offset measurements 155. The audio/video alignment unit 160 synchronizes the video data and the audio data based on the offset measurements 155 to produce synchronized video and audio data.

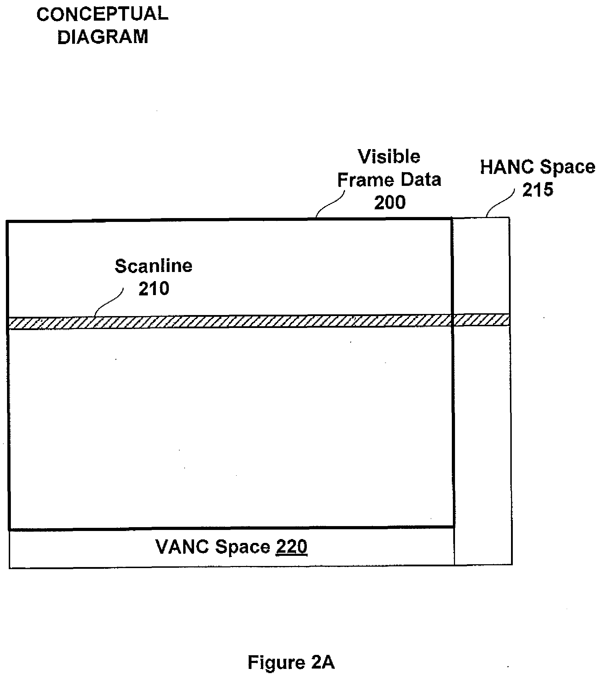

Figure 2A is a conceptual diagram illustrating a frame including a scanline 210 of video data as well as corresponding audio data and the VANC space 220, according to one embodiment of the invention. The video data is stored in a visible frame data 200 portion of the frame. When one type of HDTV format is used, a frame includes 750 scanlines with the visible frame data 200 occupying 720 scanlines and the VANC space 220 occupying 30 scanlines. The horizontal ancillary (HANC) space 215 is also included in the frame and stores audio data for each scanline of the frame. Multiple channels of audio data may be stored in the HANC space 215 with each channel represented by a pair of audio signals.

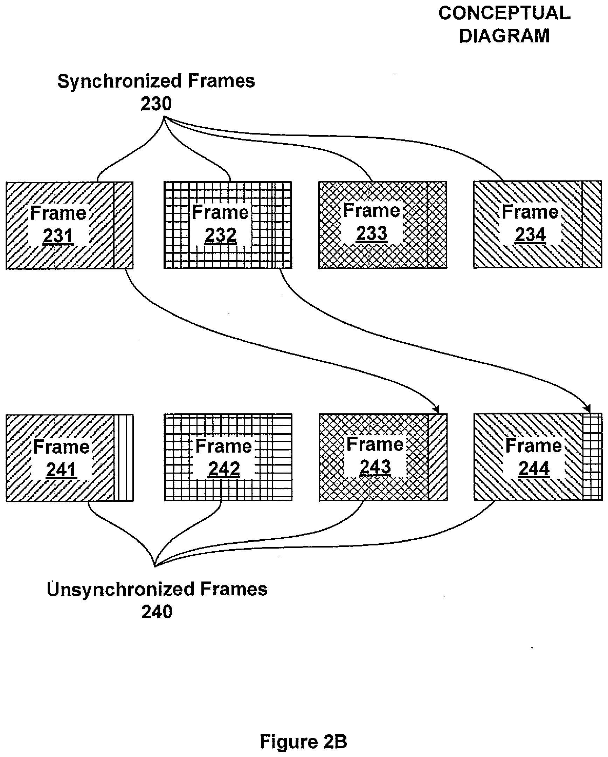

Figure 2B is a conceptual diagram illustrating a sequence of synchronized frames of video data and corresponding audio data 230 as well as a sequence of unsynchronized frames of video data and corresponding audio data 240, according to one embodiment of the invention. The video data and corresponding audio data for each of frames 231, 232, 233, and 234 is shown in the same pattern, with the audio data residing in the HANC space and the video data residing in the visible frame space. The audio data is delayed by the television origination facility 102 and appears offset by two frames in frames 241, 242, 243, and 244 of the unsynchronized frames of video and corresponding audio data 240. More specifically, the audio data from frame 231 arrives at the reception facility 132 in frame 243 along with the video data from frame 233. Similarly, the audio data from frame 232 arrives at the reception facility 132 in frame 244 along with the video data from frame 234. In order to properly synchronize the audio and video data, the reception facility 132 either delays the video data by two frames to appear in the frame with the corresponding audio data or the reception facility 132 advances the audio data by two frames to be output with the frame containing the corresponding video data. In another example, the audio data may be delayed or advanced by one or more scanlines within a frame relative to the video data. In order to properly synchronize the audio and video data, the reception facility 132 either delays the video data by the same number of scanlines or delays the audio data by the same number of scanlines to align the corresponding video and audio data.

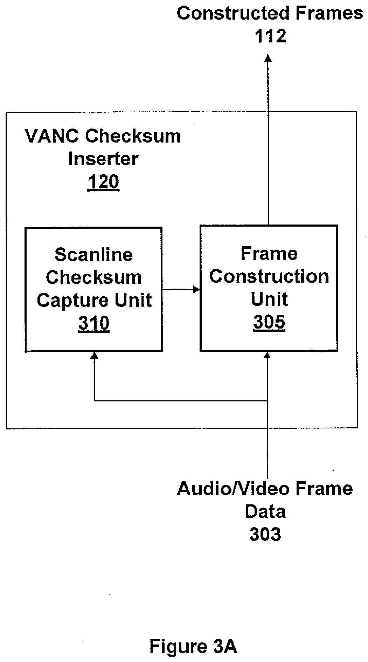

Figure 3A is a block diagram illustrating the VANC checksum inserter 120 of FIG. 1, according to one embodiment of the invention. The VANC checksum inserter 120 includes a scanline checksum capture unit 310 and a frame construction unit 305. The scanline checksum capture unit 310 may be configured to receive audio/video frame data 303 and capture a checksum for the video data in a particular scanline 210 for several frames in a sequence of frames. The scanline checksum capture unit 310 may also be configured to capture a checksum for each pair of audio signals corresponding to the same scanline 210 for several frames in a sequence of frames. In some embodiments, checksums are captured for each scanline of a frame. The captured checksums are then encoded in the VANC space 220 for each frame by the frame construction unit 305 to produce constructed frames that include the video and audio signals and the video and audio characterization data, e.g., checksums, for each frame.

Since the checksums are captured at a point where the video and audio data is synchronized, the checksums can function as characterization data that are used by the reception facility 132 to resynchronize the video and audio data. However, if the video and/or audio data is modified in a manner that would change the value of the checksum after the checksum is encoded in the VANC space, the checksums cannot be used as characterization data. Examples of modifications that change the checksum for audio include increasing or decreasing the volume level of an audio channel.

In one embodiment, the frame construction unit 305 inserts the captured checksums into the VANC space 220 using the data ID (DID) 0x52 and the secondary data ID (SID) 0x01 as per SMPTE 272M-2004 and 291M-2006 guidelines for the insertion of user-defined data into an HDTV signal. Any scanline of the visible frame data 200 of the frames may be used to capture the checksums for the video and audio data. In order to compensate for any delay introduced between the video and audio signals by the television origination facility 102 and properly synchronize the video and audio data at the reception facility, the video and audio signals should not be constant, e.g., a static test pattern. When the checksums for each frame are identical, any relative offset introduced by the television origination facility 102 cannot be determined when the checksums in the VANC space are extracted and compared with checksums captured from the received video and audio signals. Since a lack of synchronization between constant signals is not noticed by a viewer, it is not necessary to synchronize constant signals.

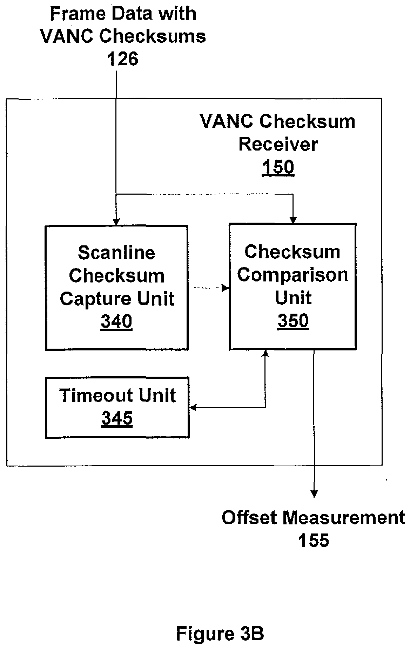

Figure 3B is a block diagram illustrating the VANC checksum receiver 150 of FIG. 1, according to one embodiment of the invention. The VANC checksum receiver 150 includes a scanline checksum capture unit 340, a checksum comparison unit 350, and a timeout unit 345. The scanline checksum capture unit 340 receives the frame data with VANC checksums 126 for frames of data in a sequence and captures checksums for the video data in a particular scanline 210 for several frames in a sequence of frames. The scanline checksum capture unit 340 is also configured to capture a checksum for each pair of audio signals corresponding to the same scanline 210 for several frames in a sequence of frames. In some embodiments, checksums are captured for each scanline of a frame. Importantly, in order to detect a lack of synchronization at a scanline level, the scanline checksum capture unit 340 should capture checksums for each scanline of a frame. The checksum comparison unit 350 receives the frame data with VANC checksums 126 and extracts the checksums encoded in the VANC space. The captured checksums for each scanline of each frame are then compared with the extracted checksums for the audio and video signals of each frame by the checksum comparison unit 350.

The checksum comparison unit 350 compares the captured checksums with extracted checksums for scanlines and frames that occur earlier and later in the sequence of frames since the audio signal for one or more channels may be delayed or advanced in time relative to the video signal. The checksum comparison unit 350 determines an offset measurement for each one of the audio channel pairs associated with a checksum and outputs the offset measurements for each frame as offset measurement 155. The offset measurement is the relative offset in time between the audio and video signals for the sequence of frames. The timeout unit 345 tracks the number of clock cycles or frames for which a match is not found and indicates that the offset measurement cannot be determined when the number of frames or clock cycles exceeds a predetermined value. In some embodiments the predetermined value is the number of frames for which extracted checksums are buffered for the comparison operation.

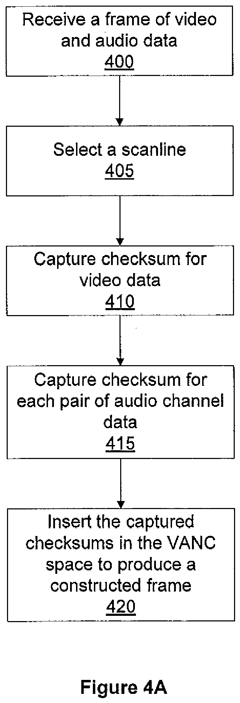

Figure 4A is a flowchart of method steps describing the operation of the VANC checksum inserter 120 of FIG. 3A, according to one embodiment of the invention. The VANC checksum inserter 120 generates characterization data that is transmitted by the television origination facility 102 and used by a reception facility 132 to determine a relative offset in time between audio and video signals. At step 400 the VANC checksum inserter 120 receives a frame of video and audio data. At step 405 the VANC checksum inserter 120 selects the video and audio data for a scanline of the frame. At step 410 the VANC checksum inserter 120 generates characterization data for video signal of the frame by capturing the checksum for the video data corresponding to the scanline. At step 415 the VANC checksum inserter 120 generates characterization data for the audio signals of the frame by capturing the checksum for one or more channel pairs of the video data corresponding to the scanline.

At step 420 the frame construction unit 305 inserts the characterization data for the frame into the VANC space of a signal that includes the video and audio signals for the frame. The television origination facility 102 then transmits the constructed frame to a reception facility 132 that is configured to determine the relative offset in time between the audio and video signals for the sequence of frames using characterization data for each frame. The constructed frame also includes checksums for each scanline in the frame that are encoded outside of the VANC space of the signal. These per-scanline checksums are used to detect whether or not the frame data is corrupted when it is received by the reception facility.

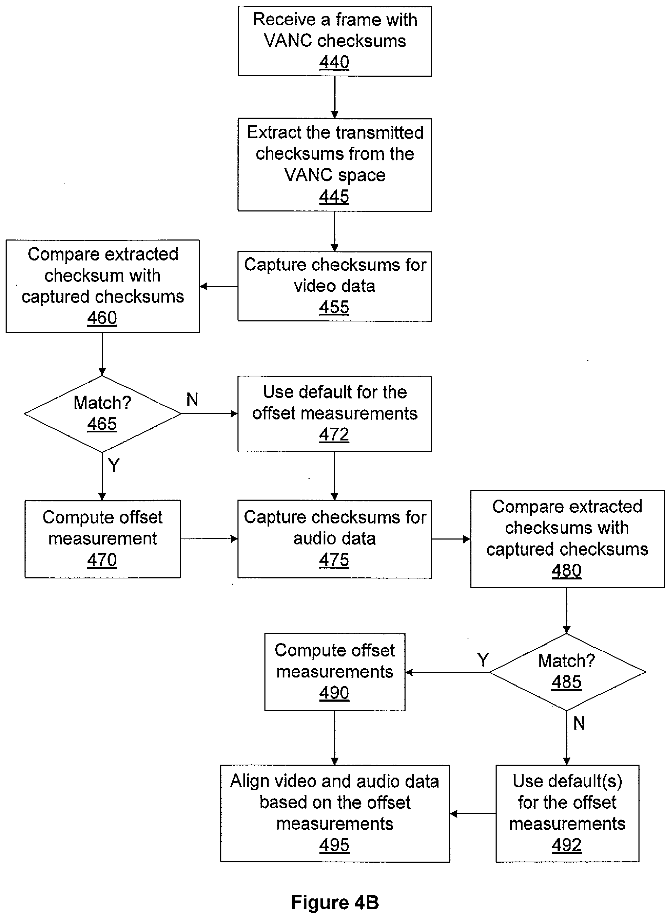

Figure 4B is a flowchart of method steps describing the operation of the VANC checksum receiver 150 of FIG. 3B, according to one embodiment of the invention. The VANC checksum receiver 150 is configured to characterize a relative offset in time between audio and video signals in a sequence of frames. At step 440 the VANC checksum receiver 150 receives a frame with VANC checksums and video and audio data from the television origination facility 102. At step 445 the transmitted characterization data, e.g., checksums that are included in the VANC space, are extracted from the frame.

At step 455 the scanline checksum capture unit 340 captures checksums for each scanline of video data in the frame, including the same scanline that was used by the television origination facility 102 to produce the VANC checksum. At step 460 the captured checksums for the video data are compared with the extracted checksum corresponding to video data for the frame. At step 465 the checksum comparison unit 350 determines if one of the captured checksums matches the extracted checksum for the video data. If a match is found at step 465, then at step 470 the offset measurement for the video data is computed and the method proceeds to step 475. Note, that in order to check if the video data for a frame is received before the corresponding checksum is received in the VANC, the captured checksums may be buffered for multiple frames and also compared with the newly extracted checksums by the checksum comparison unit 350.

If, at step 465 a match is not found, then at step 472 a default value is used for the offset measurement for the video data. For example, the offset measurement for the video data may be set to a default of zero. When no match is found and the timeout count has expired, the timeout unit 345 may indicate that the offset measurement for the video signal cannot be determined.

At step 475 the scanline checksum capture unit 340 captures per-scanline checksums for each audio channel pair in the frame, including the same scanline that was used by the television origination facility 102 to produce the VANC checksum. At step 480 the captured checksums for the audio data are compared with the extracted checksum corresponding to audio data for the sequence of frames. At step 485 the checksum comparison unit 350 determines if one of the captured checksums for an audio channel pair matches the corresponding extracted checksum for the audio channel pair. If a match is found for one or more of the audio channel pairs at step 485, then at step 490 the offset measurement for the matching audio data is computed and the method proceeds to step 495. Note, that in order to check if the audio data for a frame is received before the corresponding checksum is received in the VANC, the captured checksums may be buffered for multiple frames and also compared with the newly extracted checksums by the checksum comparison unit 350.

If at step 485, the checksum comparison unit 350 determines that none of the captured checksums for an audio channel pair matches the corresponding extracted checksum for the audio channel pair, then at step 492 a default value is used for the offset measurement. For example, the offset measurement for one or more audio pairs of the audio data may be set to a default of zero. When no match is found and the timeout count has expired, the timeout unit 345 may indicate that the offset measurement for the video signal cannot be determined.

At step 495 the audio and video data for the frame is aligned by combining buffered audio and/or video data from a previously received frame or scanlines in the sequence with the video or audio data from a later received frame or scanlines in the sequence to produce synchronized video and audio data. The audio and video data is aligned based on the offset measurements computed by the VANC checksum receiver 150.

One advantage of the systems and methods described herein is that, the characterization information is generated dynamically and transmitted by the television origination facility using in-band signaling, the television origination facility does not need to be out of service during the characterization of the relative offset in time between the video and audio signals. No additional communication channels are needed between the television origination facility and the reception facility since the reception facility is configured to extract the characterization data and determine the relative offsets in time between the video and audio signals using only the transmitted signals. Yet another advantage includes simpler and less expensive hardware, since the receiver only needs store a sequence of checksums extracted from and captured using the received signals and perform comparisons to calculate the relative offsets. The television origination facility generates and inserts captured checksums into the VANC space of each frame to provide the characterization data.

Various embodiments of the invention may be implemented as a program product for use with a computer system. The program(s) of the program product define functions of the embodiments (including the methods described herein) and can be contained on a variety of computer-readable carrier media including storage media. Illustrative computer-readable storage media include, but are not limited to: (i) non-writable storage media (e.g., read-only memory devices within a computer such as CD-ROM disks readable by a CD-ROM drive, flash memory, ROM chips or any type of solid-state non-volatile semiconductor memory) on which information is permanently stored; and (ii) writable storage media (e.g., floppy disks within a diskette drive or hard-disk drive or any type of solid-state random-access semiconductor memory) on which alterable information is stored. Other carrier media include signals such as electrical, optical, acoustic, magnetic and electromagnetic signals carrying the code.

The invention has been described above with reference to specific embodiments and numerous specific details are set forth to provide a more thorough understanding of the invention. Persons skilled in the art, however, will understand that various modifications and changes may be made thereto without departing from the broader scope of the invention. The foregoing description and drawings are, accordingly, to be regarded in an illustrative rather than a restrictive sense.

## Claims

1. A system (100) for characterizing a relative offset in time between audio and video signals, the system comprising:
a frame storage configured to:
receive, from a television origination facility (102), a sequence of frames including video and audio signals as well as in-band characterization data associated with each scanline of each frame in the sequence of frames, said characterization data including a checksum for the video data in a scanline of a video signal and a checksum for the audio signal corresponding to the same scanline, wherein each frame includes: (i) a visible frame space storing the video signals of the respective frame; (ii) a vertical ancillary (VANC) space (220) storing the checksums for the video signal and corresponding audio signal of the respective frame, said checksums being encoded in the VANC space at the television origination facility; and (iii) a horizontal ancillary (HANC) space (215) storing the audio signals of the respective frame; and
store at least a portion of the frames in the sequence of frames;
a checksum receiver (150) coupled to the frame storage and configured to:
extract the encoded checksums from the VANC space in the sequence of frames;
capture checksums for each scanline of each frame in the sequence of frames based on the video signals for the same scanline in the visible frame space for each frame in the sequence of frames and the audio signals in the HANC space in the sequence of frames; and
compare the checksums captured for each scanline of each frame of the sequence of frames with the extracted checksums to determine the relative offset in time between the audio and video signals of the sequence of frames.

2. The system of claim 1, wherein the VANC space and HANC space are distinct types of ancillary spaces.

3. The system of claim 2, wherein the audio signals include a plurality of audio channels, and each audio channel is represented by an audio channel pair, and the checksum receiver is further configured to capture the checksum for the audio signals associated with each scanline by capturing a separate checksum for each audio channel pair associated with the plurality of audio channels.

4. The system of claim 3, further comprising an audio/video alignment unit that is coupled to the checksum receiver and configured to align the video and audio signals based on the relative offset in time to produce a synchronized sequence of frames.

5. The system of claim 4, wherein the checksum receiver is further configured to compare the checksums captured for each scanline of each frame with the extracted checksums by comparing the extracted checksums for a particular frame in the sequence of frames with the captured checksums associated with one or more frames both before and after the particular frame.

6. A computer-implemented method for characterizing a relative offset in time between audio and video signals, the method comprising:
generating characterization data for synchronised audio and video signals associated with each scanline of each frame in a sequence of frames, said characterization data including a checksum for the video data in a scanline of a video signal and a checksum for the audio signal corresponding to the same scanline, wherein each frame includes: (i) a visible frame space to store video signals of the respective frame; (ii) a vertical ancillary (VANC) space (220) storing the checksums for the video signal and corresponding audio signal of the respective frame; and (iii) a horizontal ancillary (HANC) space (215) storing the audio signals of the respective frame;
inserting the checksums for the video signal and corresponding audio signal for each scanline of each frame in the sequence of frames into the VANC space of the respective frame in the sequence of frames; and transmitting the signals to a receiver that is configured to reproduce the audio and video signals associated with each scanline of each frame in the sequence of frames, wherein the audio and video signals are synchronized based on the inserted checksums.

7. A system for characterizing a relative offset in time between audio and video signals, the system comprising:
a video and audio source configured to:
output synchronized video and audio signals associated with frames in a sequence of frames;
a checksum inserter that is coupled to the video and audio source and configured to:
generate characterization data for the synchronized audio and video signals associated with each scanline of each frame in the sequence of frames, said characterization data including a checksum for the video data in a scanline of a video signal and a checksum for the audio signal corresponding to the same scanline, wherein each frame includes: (i) a visible frame space to store the video signals of the respective frame; (ii) a vertical ancillary (VANC) space; and (iii) a horizontal ancillary (HANC) space to store the audio signals of the respective frame;
insert the checksums generated for the video signal and corresponding audio signal of each scanline of the respective frame for the synchronized audio and video signals into the VANC space of a signal that includes video and audio signals of the frame in the sequence of frames; and
transmit the signal to a receiver that is configured to reproduce, based on the inserted checksums, the synchronized audio and video signals associated with each scanline of each frame in the sequence of frames.

8. The system of claim 7, wherein the VANC space and HANC space are distinct types of ancillary spaces.

9. The system of claim 8, wherein the audio signals include a plurality of audio channels, wherein each audio channel is represented by an audio channel pair.

10. The system of claim 9, wherein the step of capturing the checksum for the audio signal associated with each scanline comprises capturing a separate checksum for each audio channel pair associated with the plurality of audio channels.

11. The system of claim 10, wherein each audio checksum pertains to a respective pair of distinct audio signals of the respective scanline in the respective frame.

12. The system of claim 11, wherein the checksums are inserted into the VANC space using a data identifier (DID) and a secondary data identifier (SID) in accordance with the SMPTE 272M-2004 and SMPTE 291M-2006 guidelines, wherein the receiver is further configured to capture checksums for the video signal from the visible frame space for each scanline, extract the checksums for the video signals from the VANC space, and compare the checksums captured for each scanline of each frame with the extracted checksums for the video signals of each scanline of each frame to compute a first offset, the receiver is further configured to capture checksums for the audio signals from the HANC space for each scanline, extract the checksums for the audio signals from the VANC space, and compare the checksums captured for each scanline of each frame with the extracted checksums for the audio signals of each scanline of each frame to compute a second offset, wherein the video and audio signals of a given scanline are aligned based on the first and second offsets computed by the checksum receiver.

13. The system of claim 12, wherein the receiver is further configured to buffer, for checksum comparison, captured checksums for a duration not exceeding a predetermined threshold count of clock cycles in a first instance and captured checksums not exceeding a predetermined threshold count of frames in a second instance, such that upon no match being found in the buffered captured checksums for an extracted checksum of the video signals of a given scanline in the sequence of frames, then a first predetermined default offset is used to align the video signals of the given scanline, and such that upon no match being found in the buffered captured checksums for an extracted checksum of the audio signals of the given scanline, then a second predetermined default offset is used to align the audio signals of the given scanline.

14. The system of claim 13, whereby the relative offset in time between the audio and video signals of the sequence of frames is determined using only the sequence of frames and without requiring any communication channels other than the sequence of frames and without requiring the television origination facility to be out of service during the determination of the relative offset in time between the audio and video signals of the sequence of frames.

## Patentansprüche

1. System (100) zum Charakterisieren eines relativen Zeitversatzes zwischen Audio- und Videosignalen, das System umfassend:
einen Einzelbildspeicher, konfiguriert zum:
Empfangen von einer Fernsehursprungseinrichtung (102) einer Einzelbildsequenz enthaltend Video- und Audiosignale sowie bandinterne Charakterisierungsdaten in Verbindung mit jeder Scanlinie von jedem Einzelbild in der Einzelbildsequenz, die Charakterisierungsdaten enthaltend eine Prüfsumme für die Videodaten in einer Scanlinie eines Videosignals und eine Prüfsumme für das Audiosignal entsprechend derselben Scanlinie, wobei jedes Einzelbild enthält: (i) einen sichtbaren Einzelbildraum, der die Videosignale des jeweiligen Einzelbilds speichert; (ii) einen vertikalen Hilfsraum (vertical ancillary, VANC) (220), der die Prüfsummen für das Videosignal und entsprechende Audiosignal des jeweiligen Einzelbilds speichert, wobei die Prüfsummen im VANC-Raum bei der Fernsehursprungseinrichtung kodiert sind; und (iii) einen horizontalen Hilfsraum (horizontal ancillary, HANC) (215), der die Audiosignale des jeweiligen Einzelbilds speichert; und
Speichern mindestens eines Abschnitts der Einzelbilder in der Einzelbildsequenz;
einen Prüfsummenempfänger (150), gekoppelt mit dem Einzelbildspeicher und konfiguriert zum:
Extrahieren der kodierten Prüfsummen von dem VANC-Raum in der Einzelbildsequenz;
Erfassen von Prüfsummen für jede Scanlinie von jedem Einzelbild in der Einzelbildsequenz beruhend auf den Videosignalen für dieselbe Scanlinie im sichtbaren Einzelbildraum für jedes Einzelbild in der Einzelbildsequenz und die Audiosignale im HANC-Raum in der Einzelbildsequenz; und
Vergleichen der Prüfsummen, erfasst für jede Scanlinie von jedem Einzelbild der Einzelbildsequenz mit den extrahierten Prüfsummen, um den relativen Zeitversatz zwischen den Audio- und Videosignalen der Einzelbildsequenz zu bestimmen.

2. System nach Anspruch 1, wobei der VANC-Raum und HANC-Raum verschiedene Arten von Hilfsräumen sind.

3. System nach Anspruch 2, wobei die Audiosignale eine Vielzahl von Audiokanälen enthalten, und jeder Audiokanal durch ein Audiokanalpaar repräsentiert ist, und der Prüfsummenempfänger ferner konfiguriert ist, um die Prüfsumme für die Audiosignale in Verbindung mit jeder Scanlinie durch Erfassen einer separaten Prüfsumme für jedes Audiokanalpaar in Verbindung mit der Vielzahl von Audiokanälen zu erfassen.

4. System nach Anspruch 3, ferner umfassend eine Audio/Video-Ausrichtungseinheit, die mit dem Prüfsummenempfänger gekoppelt und konfiguriert ist, um die Video- und Audiosignale beruhend auf dem relativen Zeitversatz auszurichten, um eine synchronisierte Einzelbildsequenz zu erzeugen.

5. System nach Anspruch 4, wobei der Prüfsummenempfänger ferner konfiguriert ist, um die erfassten Prüfsummen für jede Scanlinie von jedem Einzelbild mit den extrahierten Prüfsummen durch Vergleichen der extrahierten Prüfsummen für ein spezifisches Einzelbild in der Einzelbildsequenz mit den erfassten Prüfsummen in Verbindung mit einem oder mehreren Einzelbildern vor und nach dem spezifischen Einzelbild zu vergleichen.

6. Computerimplementiertes Verfahren zum Charakterisieren eines relativen Zeitversatzes zwischen Audio- und Videosignalen, das Verfahren umfassend:
Erzeugen von Charakterisierungsdaten für synchronisierte Audio- und Videosignale in Verbindung mit jeder Scanlinie von jedem Einzelbild in einer Einzelbildsequenz, die Charakterisierungsdaten enthaltend eine Prüfsumme für die Videodaten in einer Scanlinie eines Videosignals und eine Prüfsumme für das Audiosignal entsprechend derselben Scanlinie, wobei jedes Einzelbild enthält: (i) einen sichtbaren Einzelbildraum, um die Videosignale des jeweiligen Einzelbilds zu speichern; (ii) einen vertikalen Hilfsraum (vertical ancillary, VANC) (220), der die Prüfsummen für das Videosignal und entsprechende Audiosignal des jeweiligen Einzelbilds speichert, wobei die Prüfsummen im VANC-Raum bei der Fernsehursprungseinrichtung kodiert sind; und (iii) einen horizontalen Hilfsraum (horizontal ancillary, HANC) (215), der die Audiosignale des jeweiligen Einzelbilds speichert;
Einsetzen der Prüfsummen für das Videosignal und entsprechende Audiosignal für jede Scanlinie von jedem Einzelbild in der Einzelbildsequenz in den VANC-Raum des jeweiligen Einzelbilds in der Einzelbildsequenz; und
Übertragen der Signale zu einem Empfänger, der konfiguriert ist, um die Audio- und Videosignale in Verbindung mit jeder Scanlinie von jedem Einzelbild in der Einzelbildsequenz wiederzugeben, wobei die Audio- und Videosignale beruhend auf den eingesetzten Prüfsummen synchronisiert werden.

7. System zum Charakterisieren eines relativen Zeitversatzes zwischen Audio- und Videosignalen, das System umfassend:
eine Video- und Audioquelle, konfiguriert zum:
Ausgeben synchronisierter Video- und Audiosignale in Verbindung mit Einzelbildern in einer Einzelbildsequenz;
einen Prüfsummeneinsetzer, der mit der Video- und Audioquelle gekoppelt und konfiguriert ist zum:
Erzeugen von Charakterisierungsdaten für die synchronisierten Audio- und Videosignale in Verbindung mit jeder Scanlinie von jedem Einzelbild in der Einzelbildsequenz, die Charakterisierungsdaten enthaltend eine Prüfsumme für die Videodaten in einer Scanlinie eines Videosignals und eine Prüfsumme für das Audiosignal entsprechend derselben Scanlinie, wobei jedes Einzelbild enthält: (i) einen sichtbaren Einzelbildraum, um die Videosignale des jeweiligen Einzelbilds zu speichern; (ii) einen vertikalen Hilfsraum (vertical ancillary, VANC); und (iii) einen horizontalen Hilfsraum (horizontal ancillary, HANC), um die Audiosignale des jeweiligen Einzelbilds zu speichern;
Einsetzen der erzeugten Prüfsummen für das Videosignal und entsprechende Audiosignal von jeder Scanlinie des jeweiligen Einzelbilds für die synchronisierten Audio- und Videosignale in den VANC-Raum eines Signals, das Video- und Audiosignale des Einzelbilds in der Einzelbildsequenz enthält; und
Übertragen des Signals zu einem Empfänger, der konfiguriert ist, um beruhend auf den eingesetzten Prüfsummen die synchronisierten Audio- und Videosignale in Verbindung mit jeder Scanlinie von jedem Einzelbild in der Einzelbildsequenz wiederzugeben.

8. System nach Anspruch 7, wobei der VANC-Raum und HANC-Raum verschiedene Arten von Hilfsräumen sind.

9. System nach Anspruch 8, wobei die Audiosignale eine Vielzahl von Audiokanälen enthalten, wobei jeder Audiokanal durch ein Audiokanalpaar repräsentiert ist.

10. System nach Anspruch 9, wobei der Schritt zum Erfassen der Prüfsumme für das Audiosignal in Verbindung mit jeder Scanlinie ein Erfassen einer separaten Prüfsumme für jedes Audiokanalpaar in Verbindung mit der Vielzahl von Audiokanälen umfasst.

11. System nach Anspruch 10, wobei jede Audioprüfsumme zu einem jeweiligen Paar von unterschiedlichen Audiosignalen der jeweiligen Scanlinie im jeweiligen Einzelbild gehört.

12. System nach Anspruch 11, wobei die Prüfsummen in den VANC-Raum unter Verwendung eines Datenidentifikators (data identifier DID) und eines sekundären Datenidentifikators (secondary data identifier, SID) gemäß den Richtlinien SMPTE 272M-2004 und SMPTE 291M-2006 eingesetzt werden, wobei der Empfänger ferner konfiguriert ist, um Prüfsummen für das Videosignal von dem sichtbaren Einzelbildraum für jede Scanlinie zu erfassen, die Prüfsummen für die Videosignale von dem VANC-Raum zu extrahieren und die erfassten Prüfsummen für jede Scanlinie von jedem Einzelbild mit den extrahierten Prüfsummen für die Videosignale jeder Scanlinie von jedem Einzelbild zu vergleichen, um einen ersten Versatz zu berechnen, der Empfänger ferner konfiguriert ist, um Prüfsummen für die Audiosignale von dem HANC-Raum für jede Scanlinie zu erfassen, die Prüfsummen für die Audiosignale von dem VANC-Raum zu extrahieren und die erfassten Prüfsummen für jede Scanlinie von jedem Einzelbild mit den extrahierten Prüfsummen für die Audiosignale jeder Scanlinie von jedem Einzelbild zu vergleichen, um einen zweiten Versatz zu berechnen, wobei die Video- und Audiosignale einer gegebenen Scanlinie beruhend auf dem ersten und zweiten Versatz, der durch den Prüfsummenempfänger berechnet wird, ausgerichtet werden.

13. System nach Anspruch 12, wobei der Empfänger ferner konfiguriert ist, um für einen Prüfsummenvergleich erfasste Prüfsummen über eine Dauer zwischenzuspeichern, die nicht eine vordefinierte Schwellenwertzählung von Uhrzyklen in einer ersten Instanz überschreiten, und erfasste Prüfsummen, die nicht eine vordefinierte Schwellenwertzählung von Einzelbildern in einer zweiten Instanz überschreitet, sodass wenn in den zwischengespeicherten erfassten Prüfsummen keine Übereinstimmung für eine extrahierte Prüfsumme der Videosignale einer gegebenen Scanlinie in der Einzelbildsequenz gefunden wird, dann ein erster vorbestimmter Standardversatz verwendet wird, um die Videosignale der gegebenen Scanlinie auszurichten, und sodass wenn in den zwischengespeicherten erfassten Prüfsummen für eine extrahierte Prüfsumme der Audiosignale der gegebenen Scanlinie keine Übereinstimmung gefunden wird, dann ein zweiter vorbestimmter Standardversatz verwendet wird, um die Audiosignale der gegebenen Scanlinie auszurichten.

14. System nach Anspruch 13, wobei der relative Zeitversatz zwischen den Audio- und Videosignalen der Einzelbildsequenz unter Verwendung nur der Einzelbildsequenz und ohne Notwendigkeit von Kommunikationskanälen außer der Einzelbildsequenz und ohne Notwendigkeit, dass die Fernsehursprungseinrichtung während der Bestimmung des relativen Zeitversatzes zwischen den Audio- und Videosignalen der Einzelbildsequenz außer Betrieb ist.

## Revendications

1. Système (100) destiné à caractériser un décalage relatif dans le temps entre des signaux audio et vidéo, le système comportant :
un magasin de stockage de trames configuré de manière à :
recevoir, en provenance d'une installation de télévision d'origine (102), une séquence de trames incluant des signaux vidéo et audio ainsi que des données de caractérisation intra-bande associés à chaque ligne de balayage de chaque trame dans la séquence de trames, lesdites données de caractérisation incluant une somme de contrôle pour les données vidéo dans une ligne de balayage d'un signal vidéo et une somme de contrôle pour le signal audio correspondant à la même ligne de balayage, dans lequel chaque trame inclut : (i) un espace de trame visible stockant les signaux vidéo de la trame respective ; (ii) un espace auxiliaire vertical (VANC) (220) stockant les sommes de contrôle pour le signal vidéo et un signal audio correspondant de la trame respective, lesdites sommes de contrôle étant codées dans l'espace auxiliaire VANC au niveau de l'installation de télévision d'origine ; et (iii) un espace auxiliaire horizontal (HANC) (215) stockant les signaux audio de la trame respective ; et
stocker au moins une partie des trames dans la séquence de trames ;
un récepteur de sommes de contrôle (150) couplé au magasin de stockage de trames, et configuré de manière à :
extraire les sommes de contrôle codées de l'espace auxiliaire VANC dans la séquence de trames ;
capturer des sommes de contrôle pour chaque ligne de balayage de chaque trame dans la séquence de trames, sur la base des signaux vidéo pour la même ligne de balayage dans l'espace de trame visible pour chaque trame dans la séquence de trames et des signaux audio dans l'espace auxiliaire HANC dans la séquence de trames ; et
comparer les sommes de contrôle capturées pour chaque ligne de balayage de chaque trame de la séquence de trames aux sommes de contrôle extraites, en vue de déterminer le décalage relatif dans le temps entre les signaux audio et vidéo de la séquence de trames.

2. Système selon la revendication 1, dans lequel l'espace auxiliaire VANC et l'espace auxiliaire HANC correspondent à des types distincts d'espaces auxiliaires.

3. Système selon la revendication 2, dans lequel les signaux audio incluent une pluralité de canaux audio, dans lequel chaque canal audio est représenté par une paire de canaux audio, et le récepteur de sommes de contrôle est en outre configuré de manière à capturer la somme de contrôle pour les signaux audio associés à chaque ligne de balayage en capturant une somme de contrôle individuelle pour chaque paire de canaux audio associée à la pluralité de canaux audio.

4. Système selon la revendication 3, comprenant en outre une unité d'alignement audio/vidéo qui est couplée au récepteur de sommes de contrôle, et qui est configurée de manière à aligner les signaux vidéo et audio sur la base du décalage relatif dans le temps, en vue de produire une séquence de trames synchronisée.

5. Système selon la revendication 4, dans lequel le récepteur de sommes de contrôle est en outre configuré de manière à comparer les sommes de contrôle capturées pour chaque ligne de balayage de chaque trame aux sommes de contrôle extraites, en comparant les sommes de contrôle extraites pour une trame spécifique dans la séquence de trames aux sommes de contrôle capturées associées à une ou plusieurs trames situées avant et après la trame spécifique.

6. Procédé, mis en oeuvre par ordinateur, de caractérisation d'un décalage relatif dans le temps entre des signaux audio et vidéo, le procédé comprenant les étapes ci-dessous consistant à :
générer des données de caractérisation pour des signaux audio et vidéo synchronisés associés à chaque ligne de balayage de chaque trame dans une séquence de trames, lesdites données de caractérisation incluant une somme de contrôle pour les données vidéo dans une ligne de balayage d'un signal vidéo et une somme de contrôle pour le signal audio correspondant à la même ligne de balayage, dans lequel chaque trame inclut : (i) un espace de trame des visible pour stocker signaux vidéo de la trame respective ; (ii) un espace auxiliaire vertical (VANC) (220) stockant les sommes de contrôle pour le signal vidéo et un signal audio correspondant de la trame respective ; et (iii) un espace auxiliaire horizontal (HANC) (215) stockant les signaux audio de la trame respective ;
insérer les sommes de contrôle pour le signal vidéo et un signal audio correspondant pour chaque ligne de balayage de chaque trame dans la séquence de trames, dans l'espace auxiliaire VANC de la trame respective dans la séquence de trames; et
transmettre les signaux à un récepteur qui est configuré de manière à reproduire les signaux audio et vidéo associés à chaque ligne de balayage de chaque trame dans la séquence de trames, dans lequel les signaux audio et vidéo sont synchronisés sur la base des sommes de contrôle insérées.

7. Système destiné à caractériser un décalage relatif dans le temps entre des signaux audio et vidéo, le système comportant :
une source vidéo et audio configurée de manière à :
délivrer en sortie des signaux vidéo et audio synchronisés associés à des trames dans une séquence de trames ;
un module d'insertion de sommes de contrôle qui est couplé à la source vidéo et audio, et qui est configuré de manière à :
générer des données de caractérisation pour les signaux audio et vidéo synchronisés associés à chaque ligne de balayage de chaque trame dans la séquence de trames, lesdites données de caractérisation incluant une somme de contrôle pour les données vidéo dans une ligne de balayage d'un signal vidéo et une somme de contrôle pour le signal audio correspondant à la même ligne de balayage, dans lequel chaque trame inclut : (i) un espace de trame visible pour stocker les signaux vidéo de la trame respective ; (ii) un espace auxiliaire vertical (VANC) ; et (iii) un espace auxiliaire horizontal (HANC) pour stocker les signaux audio de la trame respective ;
insérer les sommes de contrôle générées pour le signal vidéo et un signal audio correspondant de chaque ligne de balayage de la trame respective pour les signaux audio et vidéo synchronisés dans l'espace auxiliaire VANC d'un signal qui inclut des signaux audio et vidéo de la trame dans la séquence de trames ; et
transmettre le signal à un récepteur qui est configuré de manière à reproduire, sur la base des sommes de contrôle insérées, les signaux audio et vidéo synchronisés associés à chaque ligne de balayage de chaque trame dans la séquence de trames.

8. Système selon la revendication 7, dans lequel l'espace auxiliaire VANC et l'espace auxiliaire HANC correspondent à des types distincts d'espaces auxiliaires.

9. Système selon la revendication 8, dans lequel les signaux audio incluent une pluralité de canaux audio, dans lequel chaque canal audio est représenté par une paire de canaux audio.

10. Système selon la revendication 9, dans lequel l'étape de capture de la somme de contrôle pour le signal audio associé à chaque ligne de balayage consiste à capturer une somme de contrôle individuelle pour chaque paire de canaux audio associée à la pluralité de canaux audio.

11. Système selon la revendication 10, dans lequel chaque somme de contrôle audio se rapporte à une paire respective de signaux audio distincts de la ligne de balayage respective dans la trame respective.

12. Système selon la revendication 11, dans lequel les sommes de contrôle sont insérées dans l'espace auxiliaire VANC en utilisant un identificateur de données (DID) et un identificateur de données secondaire (SID) conformément aux lignes directrices SMPTE 272M-2004 et SMPTE 291M-2006, dans lequel le récepteur est en outre configuré de manière à capturer des sommes de contrôle pour le signal vidéo à partir de l'espace de trame visible pour chaque ligne de balayage, à extraire les sommes de contrôle pour les signaux vidéo de l'espace auxiliaire VANC, et à comparer les sommes de contrôle capturées pour chaque ligne de balayage de chaque trame aux sommes de contrôle extraites pour les signaux vidéo de chaque ligne de balayage de chaque trame en vue de calculer un premier décalage, et le récepteur est en outre configuré de manière à capturer des sommes de contrôle pour les signaux audio à partir de l'espace auxiliaire HANC pour chaque ligne de balayage, à extraire les sommes de contrôle pour les signaux audio de l'espace auxiliaire VANC, et à comparer les sommes de contrôle capturées pour chaque ligne de balayage de chaque trame aux sommes de contrôle extraites pour les signaux audio de chaque ligne de balayage de chaque trame, en vue de calculer un second décalage, dans lequel les signaux vidéo et audio d'une ligne de balayage donnée sont alignés sur la base des premier et second décalages calculés par le récepteur de sommes de contrôle.

13. Système selon la revendication 12, dans lequel le récepteur est en outre configuré de manière à mettre en mémoire tampon, à des fins de comparaison de sommes de contrôle, des sommes de contrôle capturées, pour une durée n'excédant pas un nombre seuil prédéterminé de cycles d'horloge dans une première instance, et des sommes de contrôle capturées n'excédant pas un nombre seuil prédéterminé de trames dans un seconde instance, de sorte que, dès lors qu'aucune correspondance n'est constatée dans les sommes de contrôle capturées mises en mémoire tampon pour une somme de contrôle extraite des signaux vidéo d'une ligne de balayage donnée dans la séquence de trames, alors un premier décalage par défaut prédéterminé est utilisé en vue d'aligner les signaux vidéo de la ligne de balayage donnée, et de sorte que, dès lors qu'aucune correspondance n'est constatée dans les sommes de contrôle capturées mises en mémoire tampon pour une somme de contrôle extraite des signaux audio de la ligne de balayage donnée, alors un second décalage par défaut prédéterminé est utilisé en vue d'aligner les signaux audio de la ligne de balayage donnée.

14. Système selon la revendication 13, moyennant quoi le décalage relatif dans le temps entre les signaux audio et vidéo de la séquence de trames est déterminé en utilisant uniquement la séquence de trames et sans nécessiter de canaux de communication quelconques hormis la séquence de trames, et sans nécessiter que l'installation de télévision d'origine soit hors service lors de la détermination du décalage relatif dans le temps entre les signaux audio et vidéo de la séquence de trames.
